# EUROPÄISCHE PATENTANMELDUNG

(11) **EP 1 705 401 A2**
(43) Veröffentlichungstag der Anmeldung: **27.09.2006**
(21) Anmeldenummer: 06005393.1
(22) Anmeldetag: 16.03.2006
(51) Int. Cl.: F16G 13/16

(54) **Kettenglied für eine Energieführungskette**

(30) Priorität: 21.03.2005 DE 102005013430
(71) Anmelder: Murrplastik Systemtechnik GmbH, 71570 Oppenweiler (DE)
(72) Erfinder:
(74) Vertreter: Reule, Hanspeter

(57) **Zusammenfassung**

Die Erfindung betrifft ein Kettenglied für eine Energieführungskette mit zwei Seitengliedern (12, 13) und mit mindestens einem die Seitenglieder (12, 13) miteinander verbindenden Rahmensteg (14, 16), der an seinen einander gegenüberliegenden Endseiten (18, 19) an je einem der Seitenglieder (12, 13) befestigt ist. Erfindungsgemäß ist vorgesehen, dass der mindestens eine Rahmensteg (14, 16) an beiden Seitengliedern (12, 13) mittels eines abnehmbaren Befestigungselements (40) lösbar befestigt ist und bei Lösen der Befestigung an seiner einen Endseite (18) um eine Schwenkachse bezüglich des Seitenglieds (13) verschwenkbar ist, an dem seine andere Endseite (19) befestigt ist.

## Beschreibung

Die Erfindung betrifft ein Kettenglied für eine Energieführungskette gemäß Oberbegriff des Anspruchs 1.

Bekannte Kettenglieder für Energieführungsketten weisen zwei das Kettenglied zu den Seiten hin begrenzende Seitenglieder auf, die miteinander verbunden sind und mit den Verbindungselementen einen Führungskanal für Leitungen einschließen. Dabei ist es möglich, dass die Seitenglieder einstückig miteinander verbunden sind und zusammen mit einem einstückig angeformten Verbindungselement ein U-Glied bilden, wobei das die Basis des U bildende angeformte Verbindungselement den Führungskanal nach oben oder unten begrenzt. In diesem Fall ist lediglich ein Rahmensteg notwendig, um an der der Basis des U gegenüberliegenden Seite das Kettenglied abzuschließen. Es ist auch möglich, dass die beiden Seitenglieder separate Bauteile sind, die durch zwei Rahmenstege oben und unten miteinander verbunden sind. In beiden Fällen sind die Rahmenstege mit ihren einander gegenüberliegenden Endseiten an je einem der Seitenglieder befestigt, beispielsweise aufgerastet. Um den Führungskanal der Energieführungskette von außen zugänglich zu machen, müssen die Rahmenstege von den Seitengliedern entfernt und an einer Sammelstelle abgelegt werden. Dies wird als zu aufwendig empfunden.

Es ist daher Aufgabe der Erfindung, ein Kettenglied der eingangs genannten Art derart weiterzubilden, dass in ihm geführte Leitungen mit weniger Aufwand zugänglich gemacht werden können.

Die Aufgabe wird erfindungsgemäß durch ein Kettenglied mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, dass nach Abnahme lediglich eines der beiden einen Rahmensteg an den Seitengliedern befestigenden Befestigungselemente das Innere des Kettenglieds durch Verschwenken des Rahmenstegs zugänglich ist, obwohl der Rahmensteg an seinem anderen Ende an einem der Seitenglieder befestigt ist. Das Kettenglied kann dadurch wahlweise auf der einen oder auf der anderen Seite aufgeklappt werden.

Zur Verbesserung der Zugänglichkeit des Inneren des Kettenglieds ist der mindestens eine Rahmensteg zweckmäßig um einen Winkel von mindestens 90° gegenüber dem Seitenglied verschwenkbar. Die Seitenglieder weisen vorteilhaft an ihren einander zugewandten Innenseiten jeweils mindestens einen Zapfen auf, durch den die Schwenkachse für den Rahmensteg verläuft. Vorzugsweise weisen die Seitenglieder jeweils zwei im Abstand zueinander angeordnete Zapfen auf. Der mindestens eine Rahmensteg weist dann zweckmäßig an seiner dem Inneren des Kettenglieds zugewandten Innenseite zu den Zapfen komplementäre Ausnehmungen für die Aufnahme der Zapfen auf. Dies ergibt eine einfache und dennoch stabile, auch nach häufigem Verschwenken des Rahmenstegs gegenüber dem Seitenglied haltbare Verbindung. Die Ausnehmungen sind vorzugsweise bogenförmig mit zumindest teilweise rundem Querschnitt, so dass sie für die Aufnahme von runden Zapfen geeignet sind. Wenn die Seitenglieder jeweils zwei im Abstand zueinander angeordnete Zapfen aufweisen, weist der mindestens eine Rahmensteg zweckmäßig an seinen Endseiten jeweils zwei im selben Abstand wie die Zapfen zueinander angeordnete Ausnehmungen auf. Jede dieser Ausnehmungen ist für die Aufnahme eines der Zapfen bestimmt. Dabei wird bevorzugt, dass der mindestens eine Rahmensteg zwischen den endseitig im Abstand zueinander angeordneten Ausnehmungen an seiner Innenseite eine plane Innenfläche aufweist. Eine plane Innenfläche vermindert den Verschleiß der auf ihr aufliegenden, im Kettenglied geführten Leitungen.

Die Befestigungselemente weisen zweckmäßig jeweils mindestens ein Halteelement zum Übergreifen der der Innenseite abgewandten Außenseite des mindestens einen Rahmenstegs auf. Die Halteelemente weisen vorteilhaft jeweils eine Haltefläche zur Anlage an einer komplementären Anlagefläche an der Außenseite des mindestens einen Rahmenstegs auf. Der Rahmensteg ist dann zwischen den Zapfen und den Halteelementen sicher gehalten. Die Anlageflächen sind vorzugsweise Teile von Zylindermantelflächen, hierbei bevorzugt halbe Zylindermantelflächen, wobei sich die Halteflächen höchstens über den halben Umfang der Anlageflächen erstrecken. Dies sichert die Verschwenkbarkeit des Rahmenstegs gegenüber dem Seitenglied, an dem er befestigt ist. Beim Verschwenken des Rahmenstegs gegenüber dem Seitenglied gleiten die Halteflächen über die Anlageflächen bis zu einem Anschlag. Zweckmäßig weisen die Befestigungselemente mehrere, im Abstand zueinander angeordnete Halteelemente auf. Der mindestens eine Rahmensteg weist dann ebenfalls mehrere Anlageflächen auf, die im selben Abstand zueinander angeordnet sind wie die Halteelemente. Zwischen den im Abstand zueinander angeordneten Anlageflächen weist der mindestens eine Rahmensteg vorteilhaft Verstärkungsrippen auf, die sich von der einen zur anderen Endseite erstrecken. Die Verstärkungsrippen verleihen dem Rahmensteg eine erhöhte Stabilität.

Es wird bevorzugt, dass die Befestigungselemente jeweils mindestens eine Trägerplatte aufweisen, aus der das mindestens eine Halteelement vorspringt. Die Trägerplatte trägt desweiteren zweckmäßig einen Rasthaken zum Einrasten in eine Rastausnehmung in den Seitengliedern. Dadurch wird eine besonders einfache Befestigung des Befestigungselements im Seitenglied erreicht. Die Seitenglieder weisen jeweils vorteilhaft eine Vertiefung an ihrer Außenseite zum Einsetzen der Trägerplatte sowie mindestens einen, sich von der Außenseite zur Innenseite erstreckenden Durchbruch zum Durchführen des mindestens einen Halteelements auf. Die Tiefe der Vertiefung ist vorzugsweise so bemessen, dass die Trägerplatte vollständig in sie versenkt werden kann und mit der Außenfläche des Seitenglieds fluchtet.

Gemäß einer vorteilhaften Weiterbildung besteht der mindestens eine Rahmensteg aus in einer Richtung von seiner einen Endseite zu seiner anderen Endseite aneinandergereihten identischen Abschnitten mit Ausnehmungen an der Innenseite und Anlageflächen an der Außenseite. Der Rahmensteg ist damit für Kettenglieder unterschiedlicher Breite verwendbar. Für schmalere Kettenglieder muß lediglich ein Teil der Abschnitte durch Absägen oder Abbrechen entfernt werden. Die Breite des Kettenglieds ist stets ein Vielfaches der Länge eines Abschnitts des Rahmenstegs. Die Ausnehmungen können zudem der Befestigung von den Führungskanal unterteilenden Trennstegen dienen.

Zweckmäßig ist der mindestens eine Rahmensteg und/oder sind die Befestigungselemente einstückig, vorzugsweise als Spritzgussteil aus Kunststoff gefertigt. Dies erlaubt eine kostengünstige Massenfertigung.

Es wird bevorzugt, dass die Seitenglieder durch einen oberen, eine Decke des Kettenglieds bildenden ersten Rahmensteg und einen baugleichen unteren, einen Boden des Kettenglieds bildenden zweiten Rahmensteg miteinander verbunden sind, wobei der erste Rahmensteg nach Abnahme eines seiner Befestigungselemente nach oben, der zweite Rahmensteg nach Abnahme eines seiner Befestigungselemente nach unten verschwenkbar ist. Das Innere des Kettenglieds ist dadurch sowohl von oben als auch von unten her zugänglich.

Im Folgenden wird die Erfindung anhand eines in der Zeichnung dargestellten Ausführungsbeispiels näher erläutert. Es zeigen
- Fig. 1a: eine perspektivische Ansicht zweier aneinandergereihter Kettenglieder einer Energieführungskette mit teilweise nach oben verschwenkten Rahmenstegen;
- Fig. 1b: eine Draufsicht auf die Kettenglieder gemäß Fig. 1a;
- Fig. 1c: einen Schnitt entlang der Linie A-A gemäß Fig. 1b;
- Fig. 1d: einen Schnitt entlang der Linie B-B gemäß Fig. 1b und

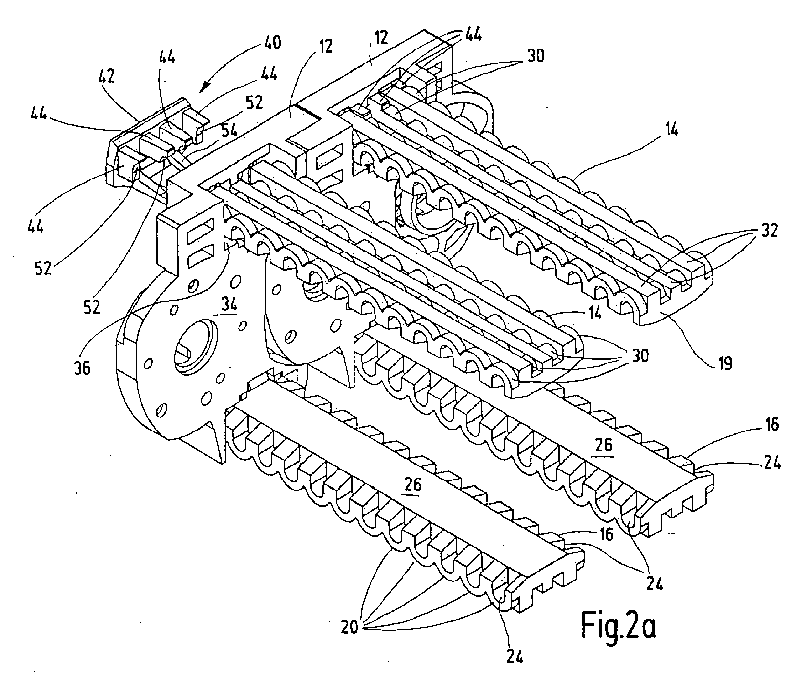

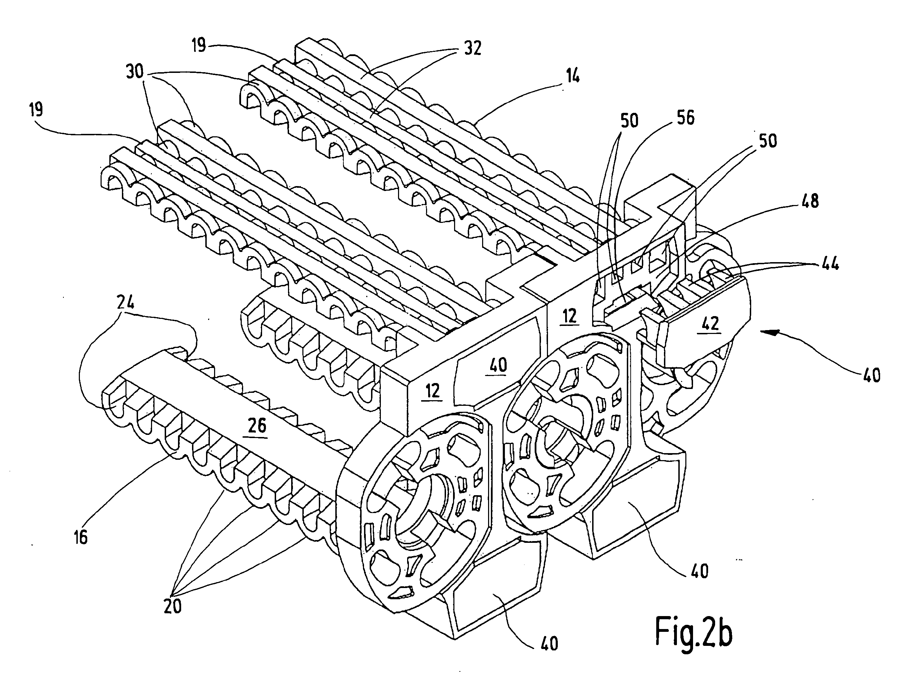

- Fig. 2a, 2b: zwei perspektivische Ansichten der Kettenglieder gemäß Fig. 1a mit einseitig entfernten Seitengliedern.

Die in den Abbildungen dargestellten Kettenglieder 10 für eine Energieführungskette weisen jeweils zwei Seitenglieder 12, 13 sowie die Seitenglieder 12, 13 paarweise miteinander verbindende obere und untere Rahmenstege 14, 16 auf. Die Seitenglieder 12, 13 und die Rahmenstege 14, 16 begrenzen einen Führungskanal 17 für Leitungen wie Schläuche und Kabel. Die Rahmenstege 14, 16 sind jeweils an zwei gegenüberliegenden Endseiten 18, 19 lösbar an den Seitengliedern-12, 13 befestigt. Die Rahmenstege 14, 16 sind als Spritzgussteile einstückig aus Kunststoff gefertigt. Sie bestehen aus einer Vielzahl von identischen Abschnitten, die in einer sich zwischen den Endseiten 18, 19 erstreckenden Längsrichtung aneinander anschließen. An der dem Führungskanal 17 zugewandten Innenseite 22 weisen die Rahmenstege 14, 16 in jedem Abschnitt zwei einander gegenüberliegende, zu ihren Längsseiten hin offene Ausnehmungen 24 auf. Die Ausnehmungen 24 sind arkadenförmig und schließen jeweils mit einem im Querschnitt halbkreisförmigen Bogen ab. Zwischen den Ausnehmungen 24 eines jeden Abschnitts 20 erstreckt sich an der Innenseite 22 der Rahmenstege 14, 16 eine plane Innenfläche 26 zwischen den beiden Endseiten 18, 19. An der der Innenseite 22 gegenüberliegenden Außenseite 28 weisen die Rahmenstege 14, 16 in jedem ihrer Abschnitte 20 vier Anlageflächen 30 auf, die als Teile von Zylindermantelflächen ausgebildet sind. Die Anlageflächen 30 jedes Abschnitts 20 sind im Abstand zueinander angeordnet, wobei sich zwischen ihnen in Längsrichtung der Rahmenstege 14, 16 verlaufende Verstärkungsrippen 32 erstrecken. Die beiden äußeren, an die Längsseiten der Rahmenstege 14, 16 angrenzenden Anlageflächen 30 weisen dabei einen größeren Radius auf als die beiden inneren Anlageflächen 30, die halbe Zylindermantelflächen sind.

An den einander zugewandten Innenseiten 34 der Seitenglieder 12, 13 sind in diese Absätze 36 eingeformt, die die Endseiten 18, 19 der Rahmenstege 14, 16 aufnehmen. In jedem der Absätze 36 sind zwei Zapfen 38 angeformt, die einen runden Querschnitt aufweisen, sowie eine gemeinsame, in Längsrichtung der Energieführungskette verlaufende Mittelachse. Die Zapfen 38 sind in den Ausnehmungen 24 der die Endseiten 18, 19 bildenden Abschnitte der Rahmenstege 14, 16 aufgenommen. Durch die halbrunde, komplementär zur Außenkontur der Zapfen 38 ausgebildete Innenkontur der Ausnehmungen 24 sind die Rahmenstege 14, 16 gegenüber den Seitengliedern 12, 13 verschwenkbar auf den Zapfen 38 gelagert, wobei die Mittelachse der Zapfen 38 die Schwenkachse bildet.

Zur Fixierung der Rahmenstege 14, 16 an den Seitengliedern 12, 13 werden Befestigungselemente 40 verwendet, die einstückig als Spritzgussteile aus Kunststoff hergestellt sind. Die Befestigungselemente 40 weisen eine Trägerplatte 42 sowie vier an der Trägerplatte 42 angeformte Halteelemente 44 auf. An den Außenseiten 46 der Seitenglieder 12, 13 sind Vertiefungen 48 eingeformt, in die die Befestigungselemente 40 zum Befestigen der Rahmenstege 14, 16 eingesetzt werden. In jeder Vertiefung 48 erstrecken sich vier Durchbrüche 50 von der Außenseite 46 zur Innenseite 34 der Seitenglieder 12, 13. Durch die Durchbrüche 50 greifen die Halteelemente 44 durch und übergreifen die Rahmenstege 14, 16 an deren Außenseite 28. Dabei kommt jedes der Halteelemente 44 mit einer Haltefläche 52 an einer Anlagefläche 30 zur Anlage. Die Halteflächen 52 weisen dabei denselben Krümmungsradius auf wie die Anlageflächen 30, an denen sie anliegen. Sie erstrecken sich jedoch maximal über den halben Umfang der Anlageflächen 30. An jeder der Trägerplatten 42 ist zudem ein Rasthaken 54 angeformt, der zur Fixierung des Befestigungselements 40 am Seitenglied 12, 13 in eine Rastausnehmung 56 in der Vertiefung 48 eingeführt und verrastet wird.

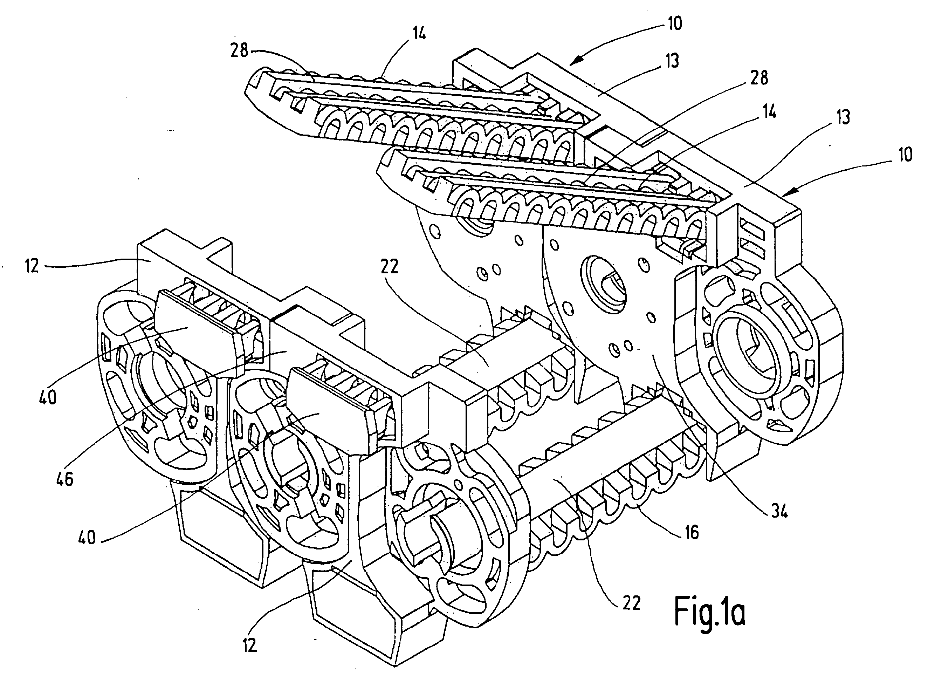

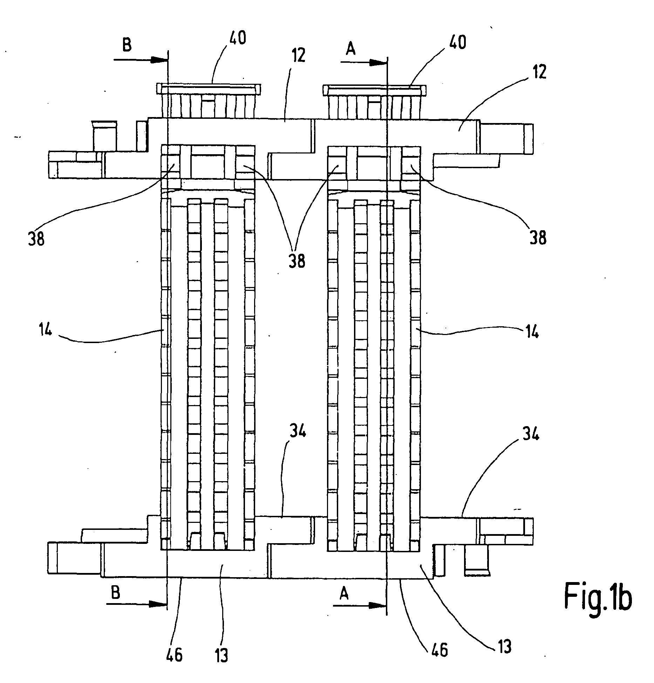

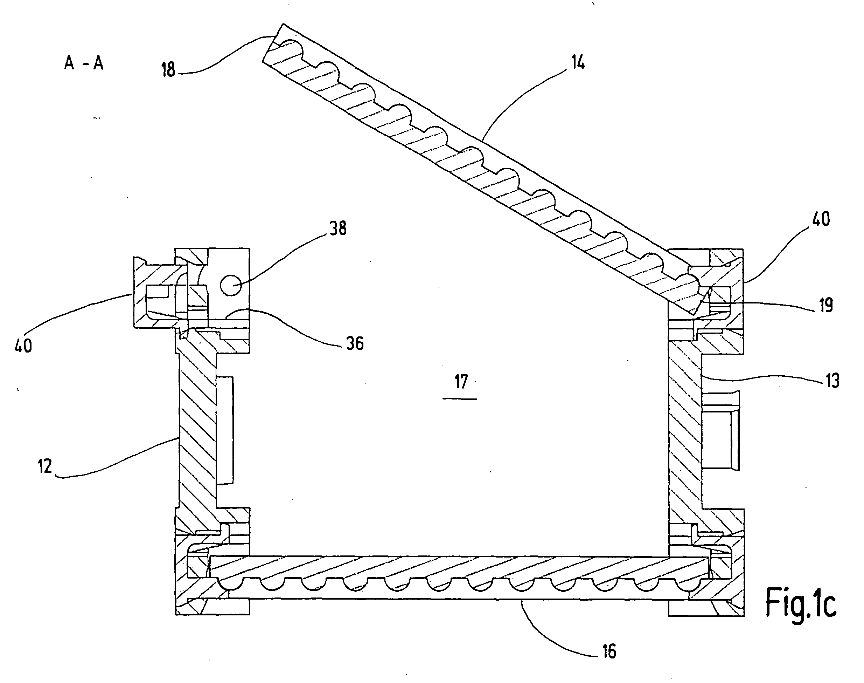

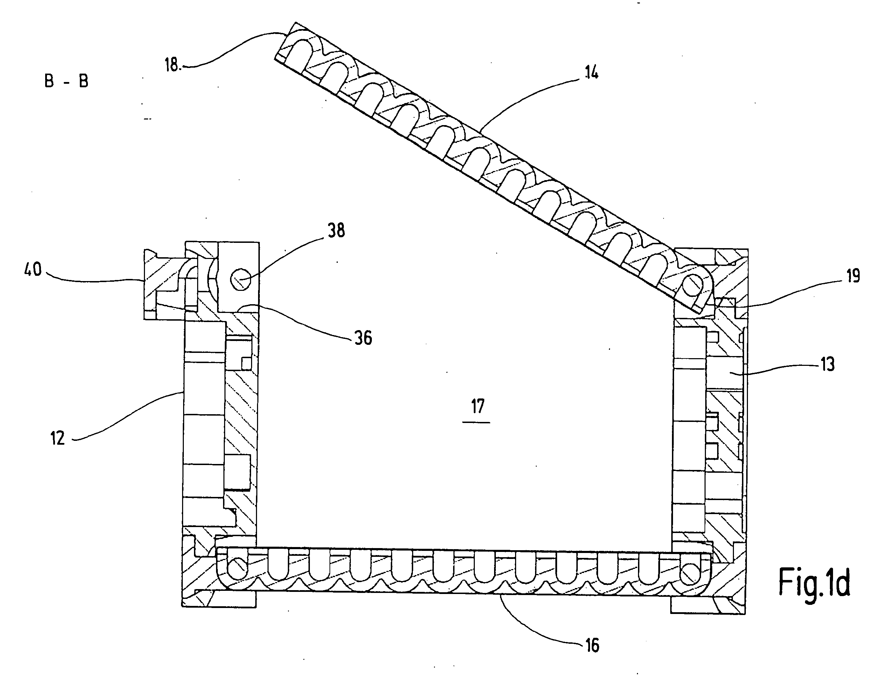

Wenn die Befestigung eines der Rahmenstege 14, 16 an einer seiner Endseiten 18 durch Herausziehen eines der Befestigungselemente 40 gelöst wird, kann der Rahmensteg um die Schwenkachse an seiner gegenüberliegenden Endseite 19 nach oben bzw. nach unten geklappt werden, wie in Fig. 1a bis 1d dargestellt. Beim Verschwenken des Rahmenstegs 14, 16 gegenüber dem Seitenglied 13, an dem er befestigt ist, gleiten die Halteflächen 52 über die komplementären Anlageflächen 30. Indem sich die Halteflächen 52 maximal über den halben Umfang der Anlageflächen 30 erstrecken, kann der Rahmensteg 14, 16 um mindestens 90° um die Schwenkachse verschwenkt werden, so dass der Führungskanal 17 zugänglich gemacht wird.

Es versteht sich von selbst, dass die Zahl der Halteelemente 44 pro Befestigungselement 40 sowie die Zahl der Anlageflächen 30 pro Abschnitt 20 der Rahmenstege 14, 16 nicht vier betragen muß.

### Zusammenfassend ist folgendes festzuhalten:

Die Erfindung betrifft ein Kettenglied für eine Energieführungskette mit zwei Seitengliedern 12, 13 und mit mindestens einem die Seitenglieder 12, 13 miteinander verbindenden Rahmensteg 14, 16, der an seinen einander gegenüberliegenden Endseiten 18, 19 an je einem der Seitenglieder 12, 13 befestigt ist. Erfindungsgemäß ist vorgesehen, dass der mindestens eine Rahmensteg 14, 16 an beiden Seitengliedern 12, 13 mittels eines abnehmbaren Befestigungselements 40 lösbar befestigt ist und bei Lösen der Befestigung an seiner einen Endseite 18 um eine Schwenkachse bezüglich des Seitenglieds 13 verschwenkbar ist, an dem seine andere Endseite 19 befestigt ist.

## Patentansprüche

1. Kettenglied für eine Energieführungskette mit zwei Seitengliedern (12, 13) und mit mindestens einem die Seitenglieder (12, 13) miteinander verbindenden Rahmensteg (14, 16), der an seinen einander gegenüberliegenden Endseiten (18, 19) an je einem der Seitenglieder (12, 13) befestigt ist, **dadurch gekennzeichnet, dass** der mindestens eine Rahmensteg (14, 16) an beiden Seitengliedern (12, 13) jeweils mittels eines abnehmbaren Befestigungselements (40) lösbar befestigt ist und bei Lösen der Befestigung an seiner einen Endseite (18) um eine Schwenkachse bezüglich des Seitenglieds (13) verschwenkbar ist, an dem seine andere Endseite (19) befestigt ist.

2. Kettenglied nach Anspruch 1, **dadurch gekennzeichnet, dass** der mindestens eine Rahmensteg (14, 16) um einen Winkel von mindestens 90° gegenüber dem Seitenglied (12, 13) verschwenkbar ist.

3. Kettenglied nach Anspruch 1 oder 2, **dadurch gekennzeichnet, dass** die Seitenglieder (12, 13) an ihren einander zugewandten Innenseiten (34) jeweils mindestens einen Zapfen (38) aufweisen, durch den die Schwenkachse für den mindestens einen Rahmensteg (14, 16) verläuft.

4. Kettenglied nach Anspruch 3, **dadurch gekennzeichnet, dass** die Seitenglieder (12, 13) jeweils zwei im Abstand zueinander angeordnete Zapfen (38) aufweisen.

5. Kettenglied nach Anspruch 3 oder 4, **dadurch gekennzeichnet, dass** der mindestens eine Rahmensteg (14, 16) an seiner dem Inneren des Kettenglieds zugewandten Innenseite (22) zu den Zapfen (38) komplementäre Ausnehmungen (24) für die Aufnahme der Zapfen (38) aufweist.

6. Kettenglied nach Anspruch 5, **dadurch gekennzeichnet, dass** die Ausnehmungen (24) bogenförmig mit zumindest teilweise rundem Querschnitt sind.

7. Kettenglied nach Anspruch 4 und einem der Ansprüche 5 oder 6, **dadurch gekennzeichnet, dass** der mindestens eine Rahmensteg (14, 16) an seinen Endseiten (18, 19) jeweils zwei im selben Abstand wie die Zapfen (38) zueinander angeordnete Ausnehmungen (24) aufweist.

8. Kettenglied nach Anspruch 7, **dadurch gekennzeichnet, dass** der mindestens eine Rahmensteg (14, 16) zwischen den endseitig im Abstand zueinander angeordneten Ausnehmungen (24) an seiner Innenseite (22) eine plane Innenfläche (26) aufweist.

9. Kettenglied nach einem der vorangehenden Ansprüche, **dadurch gekennzeichnet, dass** die Befestigungselemente (40) jeweils mindestens ein Halteelement (44) zum Übergreifen der der Innenseite (22) abgewandten Außenseite (28) des mindestens einen Rahmenstegs (14, 16) aufweisen.

10. Kettenglied nach Anspruch 9, **dadurch gekennzeichnet, dass** die Halteelemente (44) jeweils eine Haltefläche (52) zur Anlage an einer komplementären Anlagefläche (30) an der Außenseite (28) des mindestens einen Rahmenstegs (14, 16) aufweisen.

11. Kettenglied nach Anspruch 10, **dadurch gekennzeichnet, dass** die Anlageflächen (30) Teile von Zylindermantelflächen, vorzugsweise halbe Zylindermantelflächen, sind und dass sich die Halteflächen (52) höchstens über den halben Umfang der Anlageflächen (30) erstrecken.

12. Kettenglied nach einem der Ansprüche 10 oder 11, **dadurch gekennzeichnet, dass** die Befestigungselemente (40) mehrere, im Abstand zueinander angeordnete Halteelemente (44) aufweisen und dass der mindestens eine Rahmensteg (14, 16) mehrere, im selben Abstand zueinander angeordnete Anlageflächen (30) aufweist.

13. Kettenglied nach Anspruch 12, **dadurch gekennzeichnet, dass** der mindestens eine Rahmensteg (14, 16) zwischen den im Abstand zueinander angeordneten Anlageflächen (30) sich von der einen zur anderen Endseite (18, 19) erstreckende Verstärkungsrippen (32) aufweist.

14. Kettenglied nach einem der Ansprüche 9 bis 13, **dadurch gekennzeichnet, dass** die Befestigungselemente (40) jeweils mindestens eine Trägerplatte (42) aufweisen, aus der das mindestens eine Halteelement (44) vorspringt.

15. Kettenglied nach Anspruch 14, **dadurch gekennzeichnet, dass** an der Trägerplatte (42) ein Rasthaken (54) zum Einrasten in eine Rastausnehmung (56) in den Seitengliedern (12, 13) angebracht ist.

16. Kettenglied nach Anspruch 14 oder 15, **dadurch gekennzeichnet, dass** die Seitenglieder (12, 13) jeweils eine Vertiefung (48) in ihrer Außenseite (46) zum Einsetzen der Trägerplatte (42) sowie mindestens einen, sich von der Außenseite (46) zur Innenseite (34) erstreckenden Durchbruch (50) zum Durchführen des mindestens einen Halteelements (44) aufweisen.

17. Kettenglied nach einem der vorangehenden Ansprüche, **dadurch gekennzeichnet, dass** der mindestens eine Rahmensteg (14, 16) aus in einer Richtung von seiner einen Endseite (18) zur anderen Endseite (19) aneinandergereihten identischen Abschnitten (20) mit Ausnehmungen (24) an der Innenseite (22) und Anlageflächen (30) an der Außenseite (28) besteht.

18. Kettenglied nach einem der vorangehenden Ansprüche, **dadurch gekennzeichnet, dass** der mindestens eine Rahmensteg (14, 16) und/oder die Befestigungselemente (40) einstückig, vorzugsweise als Spritzgussteil aus Kunststoff gefertigt ist bzw. sind.

19. Kettenglied nach einem der vorangehenden Ansprüche, **dadurch gekennzeichnet, dass** die Seitenglieder (12, 13) durch einen oberen, eine Decke des Kettenglieds (10) bildenden ersten Rahmensteg (14) und einen baugleichen unteren, einen Boden des Kettenglieds (10) bildenden zweiten Rahmensteg (16) miteinander verbunden sind, wobei der erste Rahmensteg (14) nach Abnahme eines seiner Befestigungselemente (40) nach oben, der zweite Rahmensteg (16) nach Abnahme eines seiner Befestigungselemente (40) nach unten verschwenkbar ist.

20. Energieführungskette mit einer Vielzahl von aneinandergereihten Kettengliedern (10) nach einem der vorangehenden Ansprüche.
